# EUROPEAN PATENT APPLICATION

(11) **EP 4 553 041 A1**
(43) Date of publication of application: **14.05.2025**
(21) Application number: 24208877.1
(22) Date of filing: 25.10.2024
(51) Int. Cl.: C01B 32/05, C01B 32/318, C07G 1/00, C08H 7/00, C08H 8/00, C01B 32/20, C01B 32/205, C08L 1/04, C08L 97/00, H01M 10/0525

(54) **METHOD FOR MANUFACTURING ANODE MATERIAL FOR SECONDARY BATTERY USING LIGNOCELLULOSIC BIOMASS**

(30) Priority: 13.11.2023 KR 20230156737
(71) Applicant: Lignum Inc., Daejeon 34134 (KR)
(72) Inventor: LEE, Sang-Hyun, 34134 Daejeon (KR)
(74) Representative: Epping - Hermann - Fischer

(57) **Abstract**

Disclosed herein is a method for manufacturing an anode material for secondary batteries from lignocellulosic biomass, wherein the metal components contained in the biomass do not leach into the electrolyte, thereby contributing to improved performance and enhanced stability when the anode material is applied to a secondary battery material.

## Description

### BACKGROUND OF THE INVENTION

### 1. Field of the Invention

The present disclosure relates to a method for manufacturing an anode material for secondary batteries from lignocellulosic biomass. Specifically, the present disclosure is concerned with a method for manufacturing an anode material for secondary batteries using lignocellulosic biomass, which can contribute to improving the performance and safety of secondary batteries by removing trace metal components included in the biomass.

### 2. Description of the Related Art

Due to environmental pollution caused by excessive use of fossil fuels, the demand for eco-friendly products and alternative energy to petroleum has sharply increased. Additionally, technological development in the fields of power generation and energy storage using electrical energy as an alternative energy source is actively underway.

In particular, research and development of hybrid and electric vehicles, which can replace gasoline and diesel vehicles that are the main causes of air pollution, as well as Energy Storage Systems (ESS) capable of storing large amounts of surplus electricity, are actively being pursued. One of the key components used in manufacturing such electrical energy systems is the secondary battery, and the demand for secondary batteries in portable devices such as phones, laptops, cameras, and industrial tools is rapidly increasing.

Currently, the most representative example of such secondary batteries is the lithium-ion secondary battery. Lithium-ion secondary batteries are composed of a structure in which porous separators are interposed between current collectors, each being coated with cathode and anode active materials, and are impregnated in an electrolyte composed of a non-aqueous lithium salt.

The anode active materials used include high-cost carbonaceous and non-carbonaceous materials. Although non-carbonaceous active materials such as lithium metal, silicon (Si), and transition metal oxides are being researched, commercialization has been delayed due to various disadvantages. Carbonaceous anode active materials are generally classified into graphitic and non-graphitic, with the non-graphitic type further divided into soft carbon (graphitizable carbon) with uniaxial orientation at low temperatures and hard carbon (non-graphitizable carbon) with difficulty in achieving uniaxial orientation even at high temperatures.

Graphitic active materials, thanks to their highly reversible charge-discharge characteristics due to the uniaxial orientation of graphene layers, are currently used in most lithium-ion secondary batteries due to the long electrode life thereof that is attributed to the highly reversible charge-discharge characteristics based on the uniaxial orientation of graphene layers.

However, despite the many advantages of graphite, its low theoretical capacity (372 mAh/g) poses a significant obstacle in the current demand for high-capacity batteries. Additionally, as lithium ions are inserted between the layered structures of graphite during the charging process, the insertion of electrolytic salts into the layered structure can cause delamination. To mitigate the delamination, graphite coated with non-graphitic (amorphous) carbon is mostly employed.

Generally, anode active materials made from non-graphitic carbon have lower capacity than those made from graphitic (crystalline) carbon, but exhibit superior power characteristics compared to graphitic materials.

Currently, the demand for high-performance lithium-ion secondary batteries is rapidly increasing worldwide, leading to high costs for carbon materials used as anode active materials. Most of these materials are manufactured using coal or petroleum-based raw materials, raising concerns about economic feasibility and significant carbon dioxide emissions upon disposal. As an alternative, there has been recent research into utilizing biomass-derived anode materials.

However, due to metal components, such as potassium, sodium, etc., contained in biomass, the carbon material produced from biomass tends to retain the metal components therein. If such materials are used as electrode active materials, the metal components may dissolve into the electrolyte, triggering electrochemical reactions that could affect the performance and safety of the battery. Therefore, it is essential to remove these metal components.

With regard to a conventional technique using carbon materials derived from biomass as electrode materials, reference may be made to Korean Patent No. 10-1545116 (issued on August 17, 2015), which discloses a method for manufacturing a carbon material for the anode of a lithium-ion capacitor using coconut shell-derived charcoal as a carbon precursor. However, this method requires a gas-phase demineralization process involving heat treatment, and there are issues with capturing and removing metal-halogen complexes generated during the demineralization process.

Korean Patent No. 10-2442330 (issued on September 08, 2022) proposes a process for converting lignocellulosic materials into hard carbon forms of carbon materials. However, this patent does not address the removal of metal components contained in lignocellulosic materials, and the carbon material produced has low crystallinity and micropore uniformity, which can degrade battery performance. Additionally, due to the lack of crystallinity, the carbon material is only converted into a hard carbon form rather than a graphitic carbon material.

Therefore, there is an urgent need to develop a new, cost-effective method for manufacturing an anode material for secondary batteries, derived from environmentally friendly biomass that does not leach metal components, wherein lignocellulosic biomass, which is an economically advantageous material, is used as a raw material, whereby the method is conducted in a simple process, with the resulting active material overcoming the disadvantages of graphitic and non-graphitic materials.

### Related Art Documents

Patent Literature
(Patent Literature 0001) Korean Patent No. 10-1545116 (issued on August 17, 2015)
(Patent Literature 0002) Korean Patent No. 10-2442330 (issued on September 08, 2022)

### SUMMARY OF THE INVENTION

The present disclosure aims to provide a method for manufacturing anode materials for secondary batteries, wherein the anode material is based on highly crystalline graphitic carbon or amorphous carbon made from eco-friendly lignocellulosic biomass as a raw material in a simple and economical process and exhibits high capacity and charge-discharge efficiency.

Additionally, the present disclosure aims to provide a composition for a secondary battery anode, the composition including the aforementioned anode materials, and secondary batteries including the same.

To solve the problems encountered in the related art, the present disclosure provides a method for manufacturing anode materials for secondary batteries, with lignocellulosic biomass used as a raw material, the method comprising the steps of:
(a) adding an acid to lignocellulosic biomass to hydrolyze at least a portion of the hemicellulose within the lignocellulosic biomass with the concomitant conversion of at least a portion of the cellulose into microfibrillated cellulose (MFC), to obtain a lignin-microfibrillated cellulose complex-containing hydrolyzed reaction product;
(b) adding an aqueous alkaline solution to the lignin-microfibrillated cellulose complex-containing hydrolyzed reaction product obtained in step (a) to further remove residual acidic components and water-soluble metal components contained in the lignin-microfibrillated cellulose complex, and then separating the aqueous component to obtain solid particles of the lignin-microfibrillated cellulose complex;
(c) grinding the solid particles of the lignin-microfibrillated cellulose complex obtained in step (b) to obtain ground solid particles of the lignin-microfibrillated cellulose complex; and
(d) heat-treating the ground solid particles of the lignin-microfibrillated cellulose complex obtained in step (c) to modify at least a portion of the solid particles into a crystalline or amorphous carbon material.

In an embodiment, the acid in step (a) may be at least one selected from: an organic acid of 1 to 20 carbon atoms; an inorganic acid selected from sulfuric acid, hydrochloric acid, phosphoric acid, nitric acid, and a mixture thereof; a combination of the organic and inorganic acid; and a combination of the organic acid and the mixture of the inorganic acids, with the preference for sulfuric acid, hydrochloric acid, nitric acid, or a mixture thereof.

In an embodiment, the hydrolysis in step (a) can be carried out by: (i) heating and/or pressurization treatment in the presence of an acid, (ii) steam explosion in the presence of an acid, (iii) the heating/pressurization treatment of (i) in combination with the steam explosion of (ii), or (iv) biological degradation in the presence of one or more cellulolytic or hemicelluloytic enzymes.

In an embodiment, the method may further include, after step (a), a step of (a-1) separating and removing at least some of aqueous components from the lignin-microfibrillated cellulose complex-containing hydrolyzed reaction product if the aqueous components are present in the lignin-microfibrillated cellulose complex-containing hydrolyzed reaction product.

In an embodiment, the method may further include, before step (b), a step of (a-2) washing the lignin-microfibrillated cellulose complex-containing hydrolyzed reaction product obtained in step (a) with deionized water to remove at least some of water-soluble metal components contained in the lignocellulosic biomass.

In an embodiment, the base used in step (b) may be at least one selected from sodium hydroxide (NaOH), potassium hydroxide (KOH), ammonia (NH₃), lithium hydroxide (LiOH), potassium carbonate (K₂CO₃), sodium carbonate (Na₂CO₃), potassium bicarbonate (KHCO₃), magnesium hydroxide (Mg(OH)₂), magnesium oxide (MgO), sodium bicarbonate (NaHCO₃), and a combination thereof.

In an embodiment, the solid particles of the lignin-microfibrillated cellulose complex obtained in step (b) may have a hemicellulose content of 5 wt% or less, based on the total content of lignin-, cellulose-, and hemicellulose-derived components.

In an embodiment, the solid particles of the lignin-microfibrillated cellulose complex obtained in step (b) may contain lignin-derived components in an amount of 20 wt% to 80 wt% and cellulose-derived components in an amount of 20 wt% to 80 wt% based on the total content of lignin-, cellulose-, and hemicellulose-derived components.

In an embodiment, the ground solid particles of the lignin-microfibrillated cellulose complex obtained in step (c) may range in particle size from 500 nm to 200 um.

In an embodiment, the heat treatment in step (d) may be carried out at a temperature ranging from 500 to 3000°C.

In an embodiment, the heat treatment in step (d) may be carried out in the presence of metal catalysts, such that at least a portion of the particles obtained after the heat treatment are crystalline carbon materials. In this case, the method may further include a step of (e) acid-treating the crystalline carbon particles obtained after step (d) to remove the metal catalysts.

In an embodiment, the heat treatment in step (d) may be carried out in the absence of metal catalysts, such that at least a portion of the particles obtained after the heat treatment are amorphous carbon materials.

The present disclosure also provides anode materials for secondary batteries, manufactured by the manufacturing method. Additionally, the present disclosure provides a composition for secondary battery anodes, the composition including the anode materials.

Furthermore, the present disclosure provides secondary batteries including the composition for secondary battery anodes.

The method for manufacturing anode materials for secondary batteries according to the present disclosure employs, as a raw material, lignocellulosic biomass, which is an eco-friendly material as well as being economically advantageous in terms of production cost because of being cheap and the most abundant in the world and thus can produce highly crystalline or amorphous carbon materials cleared of residual metal components within the lignocellulosic biomass in a simple process. The secondary batteries that include the anode materials produced by the method exhibit excellent specific capacity and charge-discharge characteristics, along with stable power output performance. Furthermore, the anode materials for secondary batteries according to the present disclosure significantly reduce carbon dioxide emissions during both production and incineration compared to conventionally manufactured carbon materials from pitch, thus offering additional environmental benefits.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates (a) the hierarchical structure of cellulose derived from lignocellulosic biomass and (b) the structure of cellulose microfibrils containing crystalline and amorphous domains;
FIG. 2 shows scanning electron microscope images of the lignin-cellulose microfibril bundle and lignin-containing solid particles before grinding, manufactured in Preparation Example 1 according to the present disclosure;
FIG. 3a shows scanning electron microscope images of the amorphous hard carbon material obtained by heat treatment without a metal catalyst at 2500°C, according to the present disclosure, and FIG. 3b shows scanning electron microscope images of the graphitized crystalline carbon material obtained by heat treatment in the presence of Fe metal catalyst at 2500°C, according to the present disclosure;
FIG. 4 shows scanning electron microscope images of the amorphous hard carbon materials manufactured in Examples 2-1, 2-4, and 2-5 according to the present disclosure;
FIG. 5 illustrates the Raman spectroscopy results (RAMANtouch, nanophoton Corp.) of the carbon materials prepared in Examples 1 and 2 according to the present disclosure;
FIG. 6 shows the X-ray diffraction (XRD) analysis results of the carbon materials prepared in Examples 1 and 2 according to the present disclosure;
FIG. 7 shows plots of the (a) specific capacity and Initial Coulomb Efficiency (I.C.E.) and (b) cyclic performance of a coin cell using the anode carbon materials prepared in Example 1 according to the present disclosure (current rate: 0.1 C); and
FIG. 8 shows the results (current rates) of measuring the (a) specific capacity and Initial Coulomb Efficiency (I.C.E.) and (b) cyclic performance of a coin cell using the amorphous carbon materials prepared in Example 2 according to the present disclosure.

### DESCRIPTION OF THE PREFERRED EMBODIMENTS

Below, a detailed description will be given of the present disclosure. In each drawing of the present disclosure, sizes or scales of components may be enlarged or reduced than their actual sizes or scales for better illustration, and known components are not depicted therein to clearly show features of the present disclosure. Therefore, the present disclosure is not limited to the drawings. When describing the principle of the embodiments of the present disclosure in detail, details of well-known functions and features may be omitted to avoid unnecessarily obscuring the presented embodiments.

In drawings, for convenience of description, sizes of components may be exaggerated for clarity. For example, since sizes and thicknesses of components in drawings are arbitrarily shown for convenience of description, the sizes and thicknesses are not limited thereto. Furthermore, throughout the description, the terms "on" and "over" are used to refer to the relative positioning, and mean not only that one component or layer is directly disposed on another component or layer but also that one component or layer is indirectly disposed on another component or layer with a further component or layer being interposed therebetween. Also, spatially relative teams, such as "below", "beneath", "lower", and "between", may be used herein for ease of description to refer to the relative positioning.

Throughout the specification, unless explicitly described to the contrary, the word "comprise" and variations such as "comprises" or "comprising" will be understood to imply the inclusion of stated elements but not the exclusion of any other elements.

The present invention will be described in more detail below. In the drawings of the present disclosure, the sizes and dimensions of the structures are exaggerated or reduced for clarity, and common configurations have been omitted to emphasize the characteristic features, so the drawings should not be considered limiting.

Additionally, the sizes and thicknesses of each component shown in the drawings are arbitrarily illustrated for convenience of explanation, and the present disclosure is not necessarily limited to what is depicted. Also, in order to clearly represent various layers and regions, the thickness has been exaggerated. Furthermore, in the drawings, for ease of explanation, the thickness of some layers and regions has been exaggerated. When a part such as a layer, film, region, or plate is said to be "on" another part, it may refer to a case where the part is directly on another part or where there is another part in between. Furthermore, throughout the specification, when a part is said to "include" a certain component, unless specifically stated otherwise, it does not exclude other components and may include additional components. Also, the term "on" used throughout the specification means located above or below the target part and does not necessarily mean that it is located at the top relative to the direction of gravity.

Below, a detailed description will be given of a manufacturing method according to the present disclosure.

The present disclosure provides a method for manufacturing anode materials for secondary batteries, with lignocellulosic biomass used as a raw material, the method including the steps of: (a) adding an acid to lignocellulosic biomass to hydrolyze at least a portion of the hemicellulose within the lignocellulosic biomass with the concomitant conversion of at least a portion of the cellulose into microfibrillated cellulose (MFC), resulting in a lignin-microfibrillated cellulose complex-containing hydrolyzed reaction product; (b) adding an aqueous alkaline solution to the lignin-microfibrillated cellulose complex-containing hydrolyzed reaction product obtained in step (a) to further remove residual acidic components and water-soluble metal components contained in the lignin-microfibrillated cellulose complex, and then separating the aqueous component to obtain solid particles of the lignin-microfibrillated cellulose complex; (c) grinding the solid particles of the lignin-microfibrillated cellulose complex obtained in step (b) to obtain ground solid particles of the lignin-microfibrillated cellulose complex; and (d) heat-treating the ground solid particles of the lignin-microfibrillated cellulose complex obtained in step (c) to modify at least a portion of the solid particles into a crystalline or amorphous carbon materials.

In the first step (a) of the manufacturing method according to the present disclosure, an acid is added to lignocellulosic biomass, which is a raw material, to hydrolyze at least a portion of the hemicellulose with the concomitant modification of at least a portion of the cellulose into microfibrillated cellulose (MFC), resulting in a lignin-microfibrillated cellulose complex-containing hydrolyzed reaction product as a precursor for manufacturing a carbon materials for anode active materials for secondary batteries. The acid addition in step (a) breaks down the robust crystalline structure between lignin and cellulose within the biomass, hydrolyzes at least a portion of the hemicellulose, and converts at least a portion of the cellulose fibers, and preferably, at least 10% or more, more preferably 20% or more, more preferably 30% or more, more preferably 40% or more, more preferably 50% or more, more preferably 60% or more, more preferably 70% or more, more preferably 80% or more, more preferably 90% or more, and even more preferably up to 95% or more of the cellulose content in the biomass into microfibrillated cellulose. The acid treatment further results in the formation of a polymeric form of lignin-microfibrillated cellulose (MFC) complex where the lignin and at least a portion of the microfibrillated cellulose (MFC) are physically or chemically bound together.

In other words, the lignin-microfibrillated cellulose complex according to the present disclosure can function as an active material for a secondary battery anode when the microfibrillated cellulose in the lignin-microfibrillated cellulose (MFC) complex obtained by the acid treatment and the lignin made hydrophobic by the acid treatment are subsequently heat-treated, whereby, which is a cheap biomaterial.

Therefore, an anode material for secondary batteries can be produced from components derived from the cheap biomaterial lignocellulosic biomass in an environmentally friendly and cost-effective process.

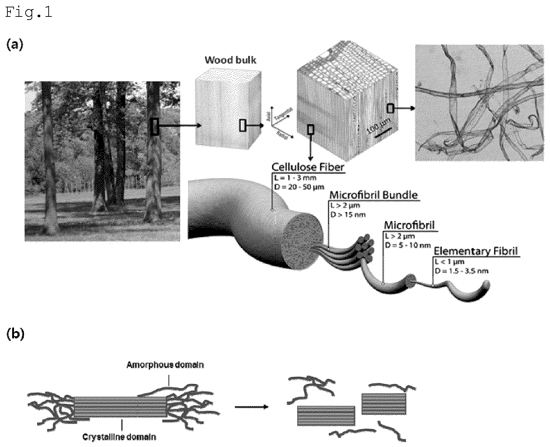

Herein, the cellulose contained in the lignocellulosic biomass is a fibrous material formed by linear chains of D-glucose units linked by β-glycosidic bonds. Referring to FIG. 1A, which shows the hierarchical structure of the biomass-derived cellulose, cellulose fibers comprise microfibril bundles composed of microfibrils, which in turn consist of the elementary fibril as the smallest structural unit.

The term "microfibrillated cellulose" (MFC), as used herein, refers to cellulose fibers with a fiber width (thickness) of 1 um or less, preferably 100 nm or less, more preferably 50 nm or less, and even more preferably 30 nm or less, obtained when lignocellulosic biomass, such as wood bulk, are defibrillated, and is intended to encompass microfibril bundles and microfibrils, as illustrated in FIG. 1A.

In this regard, as shown in FIG. 1B, the microfibrillated cellulose (MFC) has a structure that includes both crystalline domains and amorphous domains.

Additionally, in step (a), the rigid structure of the lignocellulosic biomass is broken down by acid treatment, allowing for the elution of metal components contained in the biomass. That is, the metal components in the acid-treated biomass are converted into ionic substances, making them easier to remove in subsequent dehydration and/or washing processes, thereby facilitating the removal of the metal components.

As used herein, the term "metal components" is intended to encompass at least one among various metal components, metal alloys, metal ions, and metal compounds contained in the lignocellulosic biomass.

In step (a) according to the present disclosure, the lignocellulosic biomass includes lignin and contains at least one of cellulose and hemicellulose, and preferably includes lignin, cellulose, and hemicellulose together. This lignocellulosic biomass may originate from various types of biomasses, including biomass from herbaceous sources, coniferous or broadleaf sources (ordinary wood), or agricultural residues such as rice straw, corn stalks, palm fruit shells, and sugarcane.

The lignocellulosic biomass used as the raw material in step (a) may be ground after undergoing a drying process, and for uniformity in subsequent processes, it is preferable to grind the raw material to a size of 20 mm or less and more preferably to a range of 10 to 0.001 mm.

After the grinding process, the lignocellulosic biomass may undergo a drying process to reduce moisture content. Preferably, the moisture content of the lignocellulosic biomass is reduced to 30% by weight or less, more preferably 20% by weight or less, and even more preferably 10% by weight or less. So long as it can reduce the moisture content of the lignocellulosic biomass, any drying process, such as oven drying, natural air drying in a well-ventilated area, hot air drying, etc., may be used without limitation.

Additionally, the grinding and drying steps in the present disclosure may be performed in any order. That is, the drying process may be carried out after the lignocellulosic biomass is ground, or the grinding process may be carried out after drying. The process order may vary depending on the surrounding environment or the type and moisture condition of the lignocellulosic biomass. For example, if the material is already sufficiently dry, the drying process may be omitted. In view of efficiency, the lignocellulosic biomass, which has an increased surface area after grinding, is dried afterward.

Additionally, the acid used in step (a) of the present disclosure may be an organic acid with 1 to 20 carbon atoms, an inorganic acid selected from sulfuric acid, hydrochloric acid, phosphoric acid, nitric acid, and a combination thereof, a mixture of the organic and inorganic acids, or a mixture of the organic acid and the mixture of the inorganic acids.

In the case of organic acids, they are carbon compounds containing carboxylic acids and are exemplified by monocarboxylic acids, dicarboxylic acids, tricarboxylic acids, and tetracarboxylic acids according to the number of carboxyl groups. As for the number of carbon atoms, organic acids with 1 to 20 carbon atoms and preferably with 1 to 15 carbon atoms may be used, and more preferably, acetic acid, formic acid, and propionic acid may be used.

As for the inorganic acid used, preferred examples thereof include hydrochloric acid, sulfuric acid, nitric acid, or mixtures thereof, and the acid may range in concentration preferably from 0.5 to 70 wt%, more preferably from 0.6 to 65 wt%, and even more preferably from 0.7 to 60 wt%, based on the total content of the aqueous solution containing the ground biomass and the acid. A more preferred example may be sulfuric acid, with a concentration range of 0.5 to 70 wt%, more preferably 0.6 to 65 wt%, and even more preferably 0.7 to 60 wt%, based on the total content of the aqueous solution containing the ground biomass and the acid.

For example, when 75% (v/v) sulfuric acid is added, the sulfuric acid may have a final concentration in the range of 0.5 wt% to 70 wt% and preferably in the range of 0.6 wt% to 65 wt% (based on the total content of the ground biomass and the aqueous solution). The proportion can be adjusted according to the type of biomass to find optimal conditions. If hydrochloric acid is used, a similar molar range can be calculated and applied, and when a mixed solution of sulfuric acid and hydrochloric acid is used, the amount of strong acid can be appropriately determined based on the aforementioned range.

Furthermore, the hydrolysis in step (a) of the present disclosure may be carried out by (i) adding acid while performing heating and/or pressurization treatment, (ii) adding acid while performing steam explosion, (iii) performing heating and pressurization treatment in (i) and steam explosion in (ii) in combination, or (iv) performing biological degradation using one or more cellulolytic and hemicelluloytic enzymes.

For the hydrolysis in step (a), the process (i) of adding acid while performing heating and/or pressurization treatment may include reacting a mixture of lignocellulosic biomass and an aqueous acid solution at 80 to 250°C, preferably 90 to 150°C, for 2 minutes to 2 days, preferably 5 minutes to 5 hours, under atmospheric pressure or below 10 atmospheres, followed by filtration of the solid material after decompression. The process (ii) of adding acid while performing steam explosion may include reacting a mixture of lignocellulosic biomass and an aqueous acid solution using steam at 100 to 250°C, preferably 120 to 190°C, for 5 minutes to 5 hours, preferably 10 minutes to 1 hour, followed by sudden decompression to complete the reaction. Additionally, the biological degradation process (iv) may employ any known cellulolytic and hemicelluloytic enzyme without limitation, and in processes (i) to (iv), the concentration of the acid used may vary depending on the type of acid, reaction temperature, pressure, and other conditions.

The lignin-microfibrillated cellulose complex-containing hydrolyzed reaction product obtained in step (a) according to the present disclosure may be in the form of a slurry that contains solid lignin-microfibrillated cellulose complex, acid, eluted metal components, and decomposed saccharides in the aqueous component.

Additionally, the present disclosure may include, after step (a), a step (a-1) of separating and removing at least a portion of the aqueous component from the lignin-microfibrillated cellulose complex-containing hydrolyzed reaction product in the slurry state when the aqueous component is present.

Here, the separation of the aqueous component may be carried out using any known separation technique without limitation, such as dehydration by centrifugation, filtration, or decantation.

In step (b) of the present disclosure, an aqueous alkaline solution is added to the lignin-microfibrillated cellulose complex-containing hydrolyzed reaction product obtained in step (a) to react with or dissolve the residual acidic components and water-soluble metal components in the lignin-microfibrillated cellulose complex, followed by separating and removing the aqueous component to obtain solid particles of the lignin-microfibrillated cellulose complex. This step is necessary because any residual acidic components and water-soluble metal components not removed in step (a) could negatively affect the physical and chemical properties of the anode material for secondary batteries and the performance of the secondary battery in subsequent processes.

In this regard, the separation of the aqueous component after the addition of the aqueous alkaline solution to the hydrolyzed reaction product may be carried out using any known separation technique without limitation, such as dehydration by centrifugation, filtration, or decantation.

Furthermore, the base used in step (b) may be selected from sodium hydroxide (NaOH), potassium hydroxide (KOH), ammonia (NH₃), lithium hydroxide (LiOH), potassium carbonate

(K₂CO₃), sodium carbonate (Na₂CO₃), potassium bicarbonate (KHCO₃), magnesium hydroxide (Mg(OH)₂), magnesium oxide (MgO), and sodium bicarbonate (NaHCO₃), or a mixture thereof. However, so long as it neither forms insoluble salts when neutralizing the acid components nor leaves residues in the solid particles produced in step (b), any base may be used without limitation.

Additionally, the present disclosure may further include, before step (b), a step of (a-2) washing the lignin-microfibrillated cellulose complex-containing hydrolyzed reaction product obtained in step (a) with deionized water to remove at least a portion of the water-soluble metal components included in the lignocellulosic biomass. This step results in a lignin-microfibrillated cellulose complex-containing hydrolyzed reaction product with the water-soluble metal components removed therefrom. The residual acidic components obtained after the deionized water washing can be recovered and reused.

That is, in the step (a-2), the residual acid components in the modified lignin-microfibrillated cellulose (MFC) complex obtained through step (a) is washed with deionized water, before being treated with an aqueous alkaline solution in step (b), to remove soluble substances, such as water-soluble substances containing residual saccharides from the biomass, substances derived from the acid addition process, substances that would be generated by adding a base, acidic components, and water-soluble metal components. This step helps reduce the amount of aqueous alkaline solution required in step (b).

Additionally, the present disclosure may further include, after step (b), a step of (b-1) washing the solid particles of the lignin-microfibrillated cellulose complex obtained in step (b) with deionized water and separating the aqueous solution containing the water-soluble components produced by the washing process. This allows for the additional removal of water-soluble components, such as metal components and residual alkaline components, from the solid particles.

As a result, after the removal of a certain amount of polysaccharides hydrolyzed by the acid in step (b), lignocellulosic biomass-modified solid particles can be obtained in an amount of at least 30 wt% or more, preferably 40 wt% or more, more preferably 50 wt% or more, even more preferably 60 wt% or more, and most preferably 70 wt% or more, based on the dry weight of the input lignocellulosic biomass.

In this regard, the solid particles of the lignin-microfibrillated cellulose complex obtained in step (b) may have a hemicellulose content of 5 wt% or less, preferably 3 wt% or less, and more preferably 2 wt% or less, based on the total content of lignin-, cellulose-, and hemicellulose-derived components.

In summary, the solid particles obtained through steps (a) and (b) primarily contain lignin and microfibrillated cellulose (MFC), forming a lignin-microfibrillated cellulose (MFC) complex that serves as a precursor for anode active materials.

The solid particles obtained through step (b) may contain lignin-derived components in an amount of 1 wt% to 99 wt%, preferably in an amount of 20 wt% to 80 wt%, more preferably in an amount of 30 wt% to 70 wt%, and even more preferably in an amount of 40 wt% to 60 wt%, based on the total content of lignin-, cellulose-, and hemicellulose-derived components.

Additionally, the solid particles obtained through step (b) may contain cellulose-derived components in an amount of 1 wt% to 99 wt%, preferably in an amount of 20 wt% to 80 wt%, more preferably in an amount of 25 wt% to 75 wt%, and even more preferably in an amount of 30 wt% to 70 wt%, based on the total content of lignin-, cellulose-, and hemicellulose-derived components.

Moreover, the solid particles obtained through step (b) may preferably contain 20 wt% to 80 wt% of lignin-derived components and 20 wt% to 80 wt% of cellulose-derived components based on the total content of lignin-, cellulose-, and hemicellulose-derived components.

Furthermore, after step (b), the present disclosure may further include a step of (b-1) washing the solid particles of the lignin-microfibrillated cellulose complex obtained in step (b) with deionized water and separating the aqueous solution containing water-soluble components to additionally remove metal components and residual alkaline components from the solid particles.

In step (c) of the present disclosure, the solid particles of the lignin-microfibrillated cellulose complex obtained in step (b) are ground to obtain ground solid particles. The ground solid particles, in powder form, are easier to handle and allow for more uniform heat treatment in the subsequent step (d). Additionally, this grinding process improves the dispersion of metal catalysts in subsequent processes, thereby enhancing the crystallinity and other properties of the final anode carbon materials.

Here, so long as it is known in the art, any grinding process may be used in step (c) without limitation, as exemplified by ball milling, Spex milling, and nano-milling. The particle size of the ground solid particles may range from 500 nm to 200 um.

Furthermore, before the grinding in step (c), a drying process may be performed to reduce the moisture content of the solid particles. Through the drying process, the moisture content of the solid particles can be reduced to less than 5 wt%, preferably less than 3 wt%.

In step (d) of the present disclosure, the ground lignin-microfibrillated cellulose complex solid particles obtained from step (c) are heat-treated, converting at least a portion of the solid particles into crystalline or amorphous carbon material. When the ground lignin-microfibrillated cellulose complex solid particles from step (c) are heat-treated in the presence of a metal catalyst, at least a portion of the solid particles may graphitize, forming crystalline carbon material with a graphitic structure. When the heat treatment is performed in the absence of a metal catalyst, at least a portion of the solid particles may transform into hard carbon, an amorphous carbon material. Here, the crystalline carbon material obtained through heat treatment in the presence of a metal catalyst is characterized by a lower intensity ratio of the D-band to the G-band (ID/IG) in the Raman spectrum, which serves as an indicator of the degree of defects in the graphite, than that of natural graphite (0.05).

In the solid particles obtained by heat treatment in the presence of a metal catalyst in step (d) of the present disclosure, crystalline carbon material may amount to 50 wt%, preferably to 60 wt% or more, more preferably to 70 wt% or more, even more preferably to 80 wt% or more, even more preferably to 90 wt% or more, and most preferably to 95 wt% or more of the total weight of the solid particles.

Additionally, in the solid particles obtained by heat treatment in the absence of a metal catalyst in step (d), amorphous carbon material may amount to 60 wt% or more, preferably to 70 wt% or more, more preferably to 80 wt% or more, even more preferably to 90 wt% or more, and most preferably to 95 wt% or more of the total weight of the solid particles.

At this stage, the heat treatment in step (d) may be carried out at a temperature range of 500 to 3,000°C, preferably 1,000 to 2,700°C, and more preferably 1,500 to 2,500°C.

So long as it is known as a graphitization catalyst in the art, any catalyst may be used for the heat treatment in the presence of a metal catalyst, without limitation. Examples include catalysts containing at least one metal selected from among Fe, Co, Mn, Ni, Zn, Mg, Si, Ca, Cu, Ge, Al, Ti, V, Cr, Mo, and Pb or catalysts containing a salt of the metal. For instance, the catalyst may contain at least one selected from Fe, Co, Mn, Ni, Zn, and a combination thereof. Furthermore, the metal salts used as catalysts may include Fe(NO₃)₃, Fe₂O₃, FeCl₃, Ni(NO₃)₃, and ZnO, or mixtures thereof.

In this regard, the metal catalyst may be added in an amount ranging from 5 to 60 wt%, based on the total weight of the ground solid particles, and preferably in an amount ranging from 10 to 20 wt%. If the metal catalyst is added in an amount less than 5 wt%, its catalytic effect may be minimal, resulting in a lower content of crystalline carbon material. On the other hand, if the amount exceeds the upper limit, excessive residual metal components may pose a problem.

The present disclosure may further include, after the step (d) of heat treatment in the presence of a metal catalyst, a step of (e) acid-treating the crystalline carbon material obtained in step (d) to obtain a crystalline carbon material cleared of metal catalyst components. This step prevents the inclusion of metal components in the anode active material for secondary batteries, as explained in step (a). Through the acid treatment, residual metal components originating from the metal catalyst can be converted into water-soluble metal salts, which can then be easily removed by washing.

In this regard, the type, concentration, amount, and treatment manner of the acid used for removing the residual metal catalysts components can be appropriately modified by those skilled in the art with reference to the description of the acid added in step (a). For example, when using hydrochloric acid, the acid may be set to range from 0.3 to 50 equivalents, based on the content of the metal catalyst used in step (d).

Additionally, after step (e), the present disclosure may further include a step of (e-1) washing the crystalline carbon material obtained in step (e) with deionized water. This step helps to more efficiently remove metal components originating from the metal catalysts.

Furthermore, the present disclosure may include, after step (e), a step of (f) drying and grinding the crystalline carbon material obtained in step (e) after the metal catalyst has been removed. In this case, the grinding method can be any known method without limitation, such as ball milling, Spex milling, or nano-milling, similar to the grinding method in step (c). The particle size of the final solid particles after grinding may range from 0.1 to 200 µm.

The present disclosure provides an anode material for secondary batteries manufactured by the method described above. With the advantage of high specific capacity and excellent charge-discharge performance, the crystalline carbon material manufactured from lignocellulosic biomass through the method of the present disclosure is suitable for use as an anode material for secondary batteries.

Additionally, the present disclosure provides a composition for a secondary battery anode, the composition including the anode material. Furthermore, the present disclosure provides a secondary battery including the anode composition.

A better understanding of the present disclosure may be obtained through the following examples. However, the examples described in the present disclosure may vary under different conditions, and thus, the scope of the present invention is not limited to the following examples. These examples are provided merely to explain the invention in more detail to those of ordinary skill in the art.

### [PREPARATION EXAMPLE 1: Preparation of Acid-Treated Lignin-Microfibrillated Cellulose Complex Solid Particles]

In Preparation Example 1, solid particles of lignin-microfibrillated cellulose complex were prepared by a demineralization process using an aqueous acid solution to remove metal components contained in lignocellulosic biomass.

Pine and oak were mixed at equal weight ratios and the biomass was ground to a particle size of less than 10 mesh. The ground biomass was then dried at 100°C for 2 hours until the moisture content reached 5 wt%, thus preparing the lignocellulosic biomass powder as a raw material.

Afterward, the ground biomass powder and water were introduced at a mass ratio of 1.4:1.0 into a reactor and stirred while heating to 90°C. Then, 95% sulfuric acid was added to achieve a final concentration of 10 wt%, and the mixture was stirred while heating to 120°C for 1 hour. The reaction was carried out for 60 minutes, during which hemicellulose was hydrolyzed, and at least a portion of the cellulose was converted into microfibrillated cellulose (MFC), resulting in a hydrolyzed reaction product containing solid lignin-microfibrillated cellulose complexes. The aqueous component was separated and removed by filtration.

The obtained hydrolyzed reaction product was neutralized to pH 7.0 using a 0.1 N ammonium hydroxide solution to further remove residual acidic and metal components in the lignin-microfibrillated cellulose complex, followed by dehydration to separate and remove the aqueous component.

The product was then washed and dehydrated 2 to 3 times with sufficient amounts of deionized water to remove as much residual metal ions and other ionic compounds as possible, resulting in the final lignin-microfibrillated cellulose complex solid particles.

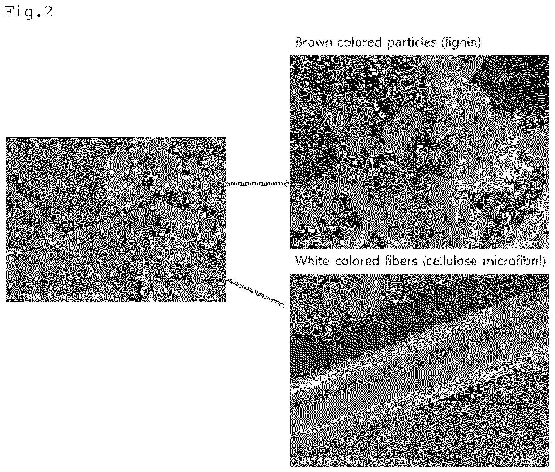

These solid particles were dried at 100°C for 6 hours, then ground to an average particle size of 20 µm to obtain the ground lignin-microfibrillated cellulose complex solid particles as a carbon precursor for conversion into a carbon material for the secondary battery anode. FIG. 2 shows electron microscope images of the lignin-microfibrillated cellulose bundle and solid particles composed of lignin, which were prepared in the Preparation Example 1, before grinding.

### [COMPARATIVE PREPARATION EXAMPLE 1: Preparation of Lignin-Microfibrillated Cellulose Solid Particles without Acid Treatment]

Solid particles of lignin-microfibrillated cellulose complex were obtained in the same manner as in the Preparation Example 1, except that sulfuric acid was not added to the reaction solution.

The amount of metal components contained in the ground lignin-microfibrillated cellulose complex solid particles obtained from the Preparation Example 1 and the Comparative Preparation Example 1 was analyzed, and the results are given in Table 1 below.

**TABLE 1**

| Metal | Residual metal content in lignin-microfibrillated cellulose complex (mg/kg) | | Testing institution (test method)* |
|---|---|---|---|
| | Preparation Ex. 1 | Comparative Ex. 1 | |
| K | ND | 70.4 | ICP (self-assessment) |
| Ca | ND | 166.7 | ICP (self-assessment) |
| Mg | ND | 19.1 | ICP (self-assessment) |
| Na | ND | ND | ICP (self-assessment) |
| Fe | ND | 55.6 | ICP (self-assessment) |
| Mn | ND | 8.4 | ICP (self-assessment) |
| Mo | ND | 3.8 | ICP (self-assessment) |
| Cd | ND | 0.1 | Korea Conformity Laboratories (ISO 8124-3:2010) |
| Cr | ND | 1.9 | Korea Conformity Laboratories (ISO 8124-3:2010) |
| Cu | ND | ND | ICP (self-assessment) |
| Ni | ND | 2.5 | ICP (self-assessment) |
| Pb | ND | ND | Korea Conformity Laboratories (ISO 8124-3:2010) |
| Zn | ND | 6.5 | ICP (self-assessment) |
| As | ND | ND | Korea Conformity Laboratories (ISO 8124-3:2010) |
| Hg | ND | ND | Korea Conformity Laboratories (ISO 8124-3:2010) |
| * Concentration after neutralization and washing (detection limits of ISO method: 2-10 mg/kg) | | | |

As shown in Table 1, when comparing the residual metal content in the lignin-microfibrillated cellulose complex solid particles between Preparation Example 1 and Comparative Preparation Example 1, the solid particles from Preparation Example 1, which underwent the acid treatment demineralization process, exhibited no detectable metal components within the detection limit (2-10 mg/kg). In contrast, various metal components were detected in the lignin-microfibrillated cellulose complex solid particles from Comparative Preparation Example 1.

### [EXAMPLES 1-1 to 1-3: Preparation of Crystalline Carbon Material for Secondary Battery Anode by Heat Treatment in Presence of Metal Catalyst]

Along with 20 g of Fe catalyst (Sigma Aldrich, product number: 12310, ≥99%, reduced, fine powder), 100 g of the lignin-microfibrillated cellulose complex solid particles from the Preparation Example 1 as a carbon precursor for the secondary battery anode was placed in a blender and mixed. The mixed powders containing the solid particles and the catalyst were placed in a furnace (Asiltech) and converted into carbon materials by heat treatment under conditions of 1,500°C (Example 1-1), 2,000°C (Example 1-2), and 2,500°C (Example 1-3) for 4 hours, respectively. During the heat treatment, nitrogen gas was supplied into the furnace at a rate of 10 L/min, and the temperature was increased by 60°C per minute.

To remove the metal catalyst, the heat-treated powders were added to a 1M HCl aqueous solution, followed by separation and removal of the aqueous components, and the residues were neutralized with a 1M ammonium hydroxide solution, washed with deionized water, and dried (at 120°C for 1 hour) to obtain crystalline carbon materials for secondary battery anodes, with a moisture content of less than 0.01% therein. No residual Fe was detected in the carbon materials from Examples 1-1 to 1-3 as analyzed by ICP-MS (detection limit: 5 mg/kg).

### [EXAMPLES 2-1 TO 2-5: Preparation of Amorphous Carbon Materials for Secondary Battery Anode by Heat Treatment without Metal Catalyst]

Carbon materials for secondary battery anodes were prepared in the same manner as in Examples 1-1 to 1-3, except that the solid particles were heated for 4 hours under conditions of 1,500°C (Example 2-1), 2,000°C (Example 2-2), 2,500°C (Example 2-3), 1,000°C (Example 2-4), and 1,250°C (Example 2-5) in the absence of Fe metal catalyst.

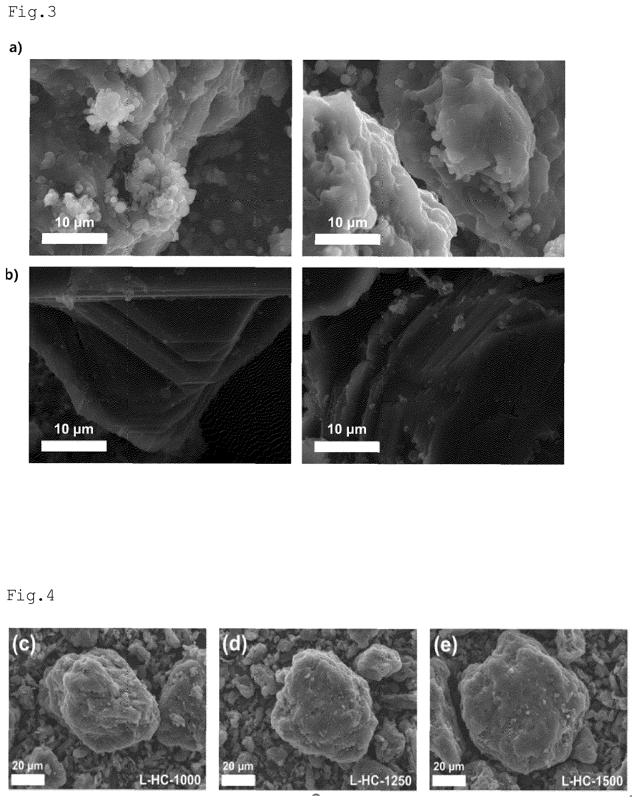

Electron microscope (FE-SEM, JSM-7100F, JEOL Ltd) images of the carbon materials from Example 1-3 and Example 2-3 (2,500°C) are shown in FIGS. 3A and 3B. Specifically, FIG. 3A shows the amorphous hard carbon material obtained by heat treatment in the absence of the metal catalyst, while FIG. 3B shows the graphitized crystalline carbon material obtained by heat treatment in the presence of the metal catalyst.

Additionally, electron microscope images of the amorphous hard carbon materials from Example 2-4 (1,000°C; L-HC-1000), Example 2-5 (1,250°C; L-HC-1250), and Example 2-1 (1,500°C; L-HC-1500) are shown in FIGS. 4(c), 4(d), and 4(e), respectively.

### [Raman Spectroscopy Analysis]

In graphite, the G peak at 1585 cm^{- 1}, arising from sp² bonds of carbon atoms, and the 2D peak at 2680 cm^{- 1}, caused by double resonance scattering, are typically observed. The D peak at 1350 cm^{- 1}, which appears in graphite, is associated with defects in the structure, and since graphite consists of stacked graphene layers, the intensity of the D peak tends to be higher due to the presence of defects. The F peak (1430 cm^{- 1}) originates from the C-C stretching mode in 5,6-membered rings, and the G* peak (~2445 cm^{- 1}) arises from turbostratic graphite.

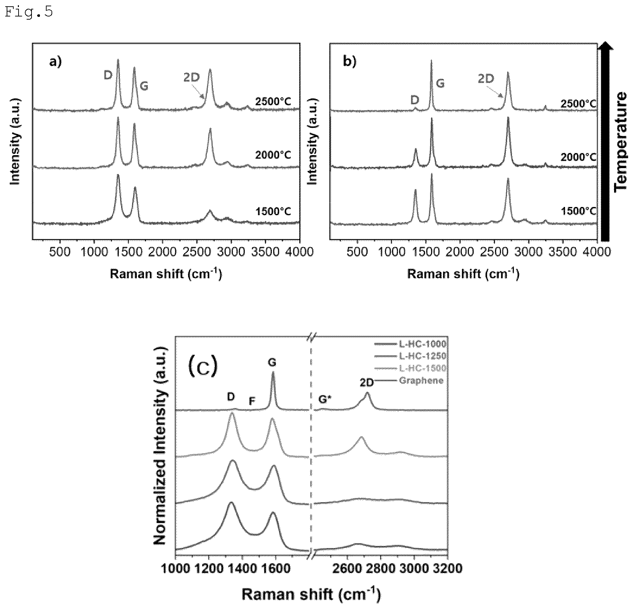

FIG. 5 shows the results of Raman spectroscopy (RAMANtouch, nanophoton Corp.) for the carbon materials produced in Examples 1 and 2. With reference to the Raman spectra of the carbon materials heat-treated without a metal catalyst in Example 2 (FIG. 5A) and those heat-treated in the presence of the metal catalyst in Example 1 (FIG. 5B) according to temperatures of heat treatment, the carbon material from Example 1 (metal catalyst used), as illustrated in FIG. 5B, tended to decrease in the intensity of D peak as the heat treatment temperature increased. Notably, at 2500°C, the D peak became very weak, and the G peak, which is proportional to the degree of crystallization, appeared strong, indicating that the material has been well-converted to crystalline graphite with minimal defects. The ID/IG ratio of the carbon material in Example 1, which indicates the degree of defects in graphite, was 0.04, demonstrating a higher degree of crystallization compared to the generally known natural graphite ID/IG ratio of 0.05.

Additionally, FIG. 5C shows the results of Raman spectroscopy for the carbon materials produced in Examples 2-1, 2-4, and 2-5, and the specific values are presented in Table 2 below.

More specifically, in FIG. 5C, L-HC-1000 (heat-treated at 1,000°C), L-HC-1250 (heat-treated at 1,250°C), and L-HC-1500 (heat-treated at 1,500°C) correspond respectively to Examples 2-4, 2-5, and 2-1. As the heat treatment temperature increases, the intensity of the D and F bands, related to defects, decreases, while the intensity of the G* and 2D bands increases. The 2D band was observed only in the L-HC-1500 sample, indicating that this sample contains a crystalline structure similar to graphite between the amorphous hard carbon. The intensity ratios of the bands are shown in Table 2 below.

**TABLE 2**

| Sample | IF/IG | ID/IG | I2D/IG |
|---|---|---|---|
| L-HC-1000 | 0.42 | 1.26 | 0.19 |
| L-HC-1250 | 0.38 | 1.13 | 0.15 |
| L-HC-1500 | 0.17 | 1.13 | 0.53 |
| Graphene reference | 0.01 | 0.04 | 0.47 |

### [X-ray Diffraction (XRD) Analysis]

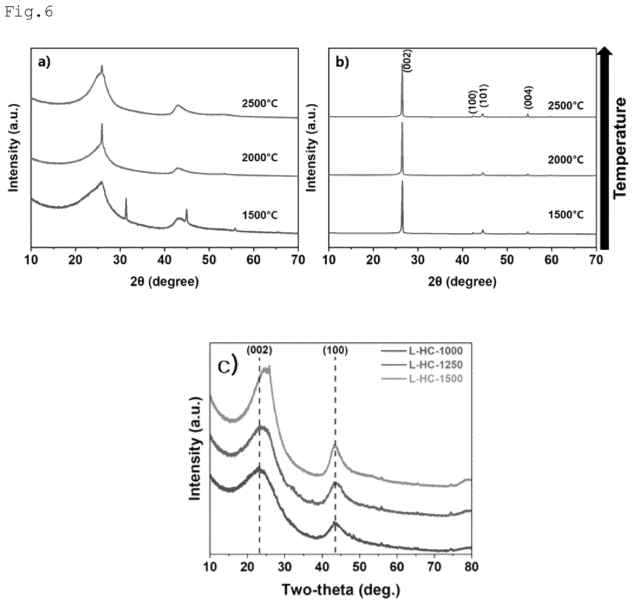

FIG. 6 shows the results of X-ray diffraction analysis (XRD; Rigaku Ultima IV) of the carbon materials produced in Examples 1 and 2. Referring to the XRD analysis by heat treatment temperature of the carbon materials heat-treated without a metal catalyst in Example 2 (FIG. 6a) and those heat-treated in the presence of a metal catalyst in Example 1 (FIG. 6b), the (002) and (004) peaks corresponding to the layered structure of graphite, as well as the (100) peak representing the planar structure of graphite and the (101) peak representing the hexagonal structure, can be clearly observed in Example 1.

In contrast to the carbon material in Example 2, which was heat-treated without a metal catalyst, the sharp and strong peak at 26° 2θ for the (002) plane, as shown in FIG. 6A, indicates that the material in Example 1 has been well-converted into crystalline graphite.

FIG. 6C shows the results of XRD analysis of the carbon materials produced at different temperatures in Example 2. In FIG. 6C, the peaks at 23-25° and 43.5° 2θ correspond to the

(002) and (001) diffraction planes of graphite. The broad shape of these peaks suggests that the structure of the hard carbon materials is amorphous, regardless of the treatment temperature. The slight shift in the position of the (002) plane peak to higher 2θ values as the treatment temperature increases indicates an increase in the disorder of the local structure.

### [EXAMPLE 3: Manufacture and Evaluation of Coin Cells Using Anode Materials for Secondary Batteries]

Coin cells were manufactured to evaluate the electrochemical properties of the crystalline carbon anode materials produced in Example 1-3 and the amorphous carbon anode materials produced in Examples 2-1, 2-4, and 2-5.

First, the crystalline carbon material produced in Example 1-3, 10 wt% acetylene black as a conductive material, and 10 wt% PVDF (polyvinylidene fluoride) as a binder were mixed at a weight ratio of 80:10:10. The mixture was dispersed in an amount of 0.5 g in 1.25 ml of NMP (1-methyl-2-pyrrolidone) to obtain a slurry for a secondary battery anode. The obtained anode slurry was coated onto a copper foil (Cu-foil) with an average loading density of 3.5 mg/cm² to form a thin electrode plate. The plate was dried at 100°C for over 5 hours, pressed, and then subjected to secondary drying in a vacuum dryer to produce an anode plate with a thickness of 40 µm.

Anode plates containing the amorphous carbon materials produced in Examples 2-1, 2-4, and 2-5 were also prepared under the same conditions as for the crystalline carbon material plates, except that the amorphous carbon materials were used instead of the crystalline carbon materials.

The electrolyte used for the crystalline carbon material was a solution of 1 M LiPF₆ (lithium hexafluorophosphate) dissolved in a mixed solvent of diethyl carbonate (DEC) and ethylene carbonate (EC) ((DEC:EC = 1:1 vol%). The separator was a porous polypropylene film from Celgard.

For the amorphous carbon material, the electrolyte was a solution of 1 M NaPF₆ dissolved in a mixed solvent of diethyl carbonate (DEC) and ethylene carbonate (EC) (DEC:EC = 1:1 vol%), with a porous polypropylene film from Celgard used as the separator.

The manufactured anode plates were used as the working electrodes. Metal lithium (Li) foil was used as the counter electrode for the anode plates made from the crystalline carbon material, while metal sodium foil (Na) was used as the counter electrode for the anode plates made from the amorphous carbon materials. Coin cells of 2023 size, including lithium half-cells and sodium half-cells, were manufactured. All steps of the coin cell manufacturing process were carried out in a glove box filled with argon gas.

The charge-discharge tests of the coin cells manufactured in Example 3 were performed using the WBCS3000 system from WonATech. For convenience, the reaction of lithium (or sodium) intercalating into the graphite layers (or hard carbon) of the working electrode is referred to as "charging," and the deintercalation of lithium (or sodium) from the graphite layers (or hard carbon) is referred to as "discharging."

The lithium coin cells manufactured in Example 3 were tested for initial charge-discharge efficiency with a current of 37.2 mA/g applied thereto, while the sodium coin cells were tested with a current of 20.0 mA/g. In this case, the specific capacity of the carbon material is defined as the amount of electric charge supplied divided by the weight of the carbon material in the electrode.

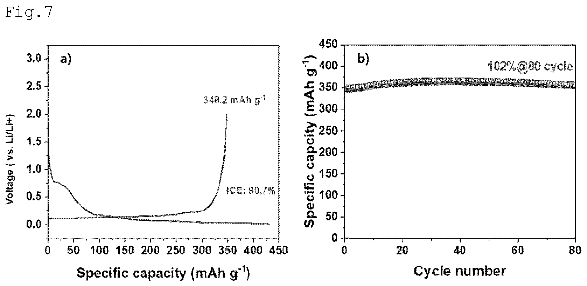

FIG. 7 shows plots (current rates) for (a) specific capacity and initial Coulomb efficiency (I.C.E.) and (b) cyclic performance of the coin cell using the anode carbon material prepared in Example 1. In FIG. 7(a), the average specific capacity values of the carbon material were measured using three lithium coin cells manufactured in Example 3 for charge-discharge evaluation. The charge capacity was measured as 431.47 mA/g, the discharge capacity as 348.2 mA/g, and the Coulombic efficiency as 80.7%.

FIG. 7(b) shows the cyclic performance of the coin cells manufactured in Example 3. The charge-discharge was carried out in constant current (CC) mode, and as shown in FIG. 7(b), the cells maintained 102% of their initial capacity even after 80 cycles, demonstrating stable output characteristics.

Comparing the performance of the batteries using crystalline carbon materials according to the present disclosure with conventional technologies, the carbon materials of the present disclosure exhibit superior properties. For example, in the experimental results of Comparative Example 2 in the related art (Korean Patent No. 10-2021-0060754 A), the initial specific capacity was 350 mAh/g, whereas the present disclosure shows 431 mAh/g. Moreover, after 80 cycles, the capacity in the related art ranged from 150 to 250 mAh/g (refer to FIG. 3 of the related art), while the present disclosure shows 350 mAh/g (refer to FIG. 7 of the present disclosure), demonstrating excellent performance.

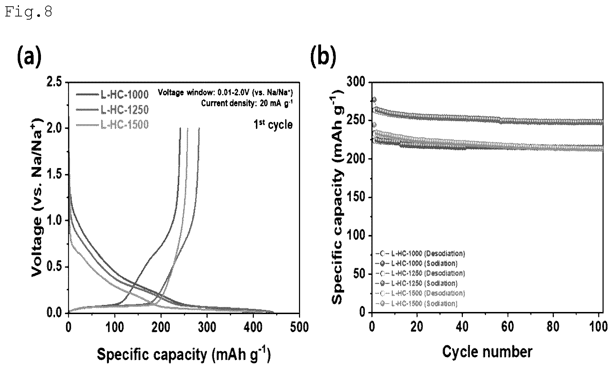

FIG. 8 presents the results of a) specific capacity and initial Coulomb efficiency (I.C.E.) and b) cyclic performance measurements for the amorphous carbon materials prepared in Examples 2-1, 2-4, and 2-5, as applied to coin cells. More specifically, FIG. 8(a) shows the average specific capacity values of three sodium coin cells manufactured and evaluated at each heat treatment temperature in Example 3. The charge capacities were measured as 388.4 mA/g, 441.7 mA/g, and 417.8 mA/g for L-HC-1000, L-HC-1250, and L-HC-1500, respectively. The discharge capacities were measured as 241.3 mA/g, 281.6 mA/g, and 256.9 mA/g, with Coulombic efficiencies of 62.12%, 63.75%, and 61.48%, respectively.

FIG. 8(b) shows the cyclic performance of the sodium coin cells evaluated in Example 3, with charge-discharge performed in constant current (CC) mode.

As shown in FIG. 8(b), the sodium coin cells maintained 95.7%, 94.1%, and 91.6% of their initial capacity after 100 cycles for L-HC-1000, L-HC-1250, and L-HC-1500, respectively, demonstrating stable output characteristics.

Comparing the performance between batteries using amorphous carbon materials of the present disclosure and the sodium batteries using carbon materials derived from biomass as described in U.S. Patent No. 2021-0376321 A as a conventional technique, the sodium batteries are reported to have an initial specific capacity of 323-337 mAh/g in Table 1 of the related art document (Examples 1-9), whereas the present disclosure shows 388-441 mAh/g, indicating superior performance.

As demonstrated by the evaluation results, the anode material for secondary batteries derived from lignocellulosic biomass according to the present disclosure is a high-crystallinity carbon material with residual metal components removed. The secondary batteries manufactured using this carbon material exhibit excellent specific capacity, charge-discharge performance, and stable output characteristics, showing great potential for application as an anode active material for secondary batteries.

## Claims

1. A method for manufacturing an anode material for a secondary battery using lignocellulosic biomass as a raw material, the method comprising the steps of:
(a) obtaining a hydrolyzed reaction product, which includes a lignin-microfibrillated cellulose complex obtained by adding an acid to lignocellulosic biomass to hydrolyze at least part of the hemicellulose in the lignocellulosic biomass and simultaneously convert at least part of the cellulose into microfibrillated cellulose (MFC);
(b) adding an aqueous alkaline solution to the lignin-microfibrillated cellulose complex-containing hydrolyzed reaction product obtained in step (a) to further remove residual acidic components and water-soluble metal components contained in the lignin-microfibrillated cellulose complex, and then separating the aqueous component to obtain solid particles of the lignin-microfibrillated cellulose complex;
(c) grinding the solid particles of the lignin-microfibrillated cellulose complex obtained in step (b) to obtain ground solid particles of the lignin-microfibrillated cellulose complex; and
(d) heat-treating the ground solid particles of the lignin-microfibrillated cellulose complex obtained in step (c) to modify at least a portion of the solid particles into a crystalline or amorphous carbon material.

2. The method of claim 1, wherein the acid in step (a) is at least one selected from: an organic acid of 1 to 20 carbon atoms; an inorganic acid selected from sulfuric acid, hydrochloric acid, phosphoric acid, nitric acid, and a mixture thereof; a combination of the organic and inorganic acid; and a combination of the organic acid and the mixture of the inorganic acids.

3. The method of claim 1, wherein the acid in step (a) is selected from hydrochloric acid, sulfuric acid, or nitric acid, or a mixture thereof.

4. The method of claim 1, wherein the hydrolysis step in step (a) is carried out by:
(i) heating and/or pressurization treatment in the presence of an acid,
(ii) steam explosion in the presence of an acid,
(iii) the heating/pressurization treatment of (i) in combination with the steam explosion of (ii), or
(iv) biological degradation in the presence of one or more cellulolytic or hemicelluloytic enzymes.

5. The method of claim 1, further comprising, after step (a) a step of (a-1) separating and removing at least part of aqueous components from the lignin-microfibrillated cellulose complex-containing hydrolyzed reaction product if the aqueous components are present in the lignin-microfibrillated cellulose complex-containing hydrolyzed reaction product obtained in step (a).

6. The method of claim 1, further comprising, before step (b), a step of (a-2) washing the lignin-microfibrillated cellulose complex-containing hydrolyzed reaction product obtained in step (a) with deionized water to remove at least part of water-soluble metal components contained in the lignocellulosic biomass.

7. The method of claim 1, wherein the base used in step (b) at least one selected from sodium hydroxide (NaOH), potassium hydroxide (KOH), ammonia (NH₃), lithium hydroxide (LiOH), potassium carbonate (K₂CO₃), sodium carbonate (Na₂CO₃), potassium bicarbonate (KHCO₃), magnesium hydroxide (Mg(OH)₂), magnesium oxide (MgO), sodium bicarbonate (NaHCO₃), and a combination thereof.

8. The method of claim 1, wherein the solid particles of the lignin-microfibrillated cellulose complex obtained in step (b) may have a hemicellulose content of 5 wt% or less, based on the total content of lignin-, cellulose-, and hemicellulose-derived components.

9. The method of claim 1, wherein the solid particles of the lignin-microfibrillated cellulose complex obtained in step (b) contain lignin-derived components in an amount of 20 wt% to 80 wt% and cellulose-derived components in an amount of 20 wt% to 80 wt% based on the total content of lignin-, cellulose-, and hemicellulose-derived components.

10. The method of claim 1, wherein the ground solid particles of the lignin-microfibrillated cellulose complex obtained in step (c) range in particle size from 500 nm to 200 µm.

11. The method of claim 1, wherein the heat treatment in step (d) is carried out at a temperature ranging from 500 to 3000°C.

12. The method of claim 1, wherein the heat treatment in step (d) is carried out in the presence of metal catalysts, whereby at least a portion of the particles obtained after the heat treatment are crystalline carbon materials.

13. The method of claim 12, further comprising, after step (d), a step of (e) acid-treating at least part of the crystalline carbon material particles obtained from step (d) to obtain a carbon material cleared of the metal catalysts.

14. The method of claim 1, wherein the heat treatment in step (d) is carried out in the absence of metal catalysts, whereby at least part of the particles obtained after the heat treatment are amorphous carbon materials.

15. An anode materials for a secondary battery, manufactured by the method of any one of claims 1 to 14.

16. A composition for a secondary battery anode, the composition comprising the anode materials of claim 15.

17. A secondary battery comprising the composition for a secondary battery anode according to claim 16.
